# EUROPÄISCHE PATENTANMELDUNG

(11) **EP 4 783 212 A1**
(43) Veröffentlichungstag der Anmeldung: **29.07.2026**
(21) Anmeldenummer: 25220428.4
(22) Anmeldetag: 03.12.2025
(51) Int. Cl.: H01H 9/54, H01H 71/12, H01H 71/28, H01H 71/24, H01H 73/36

(54) **SCHALTGERÄT**

(30) Priorität: 27.01.2025 DE 102025102798
(71) Anmelder: Ellenberger & Poensgen GmbH, 90518 Altdorf (DE)
(72) Erfinder: ENGEWALD, Manuel, 90411 Nürnberg (DE); LABS, Alexander, 90610 Winkelhaid (DE); MIKLIS, Markus, 90592 Pfeifferhütte/Schwarzenbruck (DE); KÖPF, Hendrik-Christian, 90480 Nürnberg (DE)
(74) Vertreter: FDST Patentanwälte

(57) **Zusammenfassung**

Die Erfindung betrifft ein Schaltgerät (10), das für einen Nennstrom ausgelegt ist, und das zwei Anschlüsse (16) umfasst, die mittels eines ersten Strompfads (22) und eines zweiten Strompfads (24) elektrisch verbunden sind, die elektrisch in Reihe geschaltet sind. Der erste Strompfad (22) weist einen mechanischen Schalter (26) und der zweite Strompfad (24) einen Halbleiterschalter (32) auf. Der mechanische Schalter (26) ist mit einem Antrieb (42) angetrieben, der eine erste Antriebseinheit (44), die mit einer Steuereinheit (20) bestromt ist, und eine zweite Antriebseinheit (46) aufweist, die parallel zu dem zweiten Strompfad (24) geschaltet ist. Das Schaltgerät (10) ist derart ausgebildet ist, dass der mechanische Schalter (26) in einen geöffneten Zustand überführt wird, wenn mittels der zweiten Antriebseinheit (46) ein vorbestimmter elektrischer Strom geführt wird, der kleiner als das Dreifache des Nennstroms ist. Ferner betrifft ein Verfahren (48) zum Betrieb eines Schaltgeräts (10).

## Beschreibung

Die Erfindung betrifft ein Schaltgerät und ein Verfahren zum Betrieb eines Schaltgeräts. Das Schaltgerät umfasst jeweils zwei Anschlüsse, die mittels eines ersten Strompfads und eines zweiten Strompfads elektrisch verbunden sind.

Üblicherweise werden Schutzschalter zur Absicherung einer elektrischen Leitung oder eines Geräts gegenüber einer Fehlfunktion des zugeordneten Stromkreises herangezogen, beispielsweise einer übermäßigen anliegenden elektrischen Spannung oder eines übermäßigen fließenden elektrischen Stroms. Dieser tritt beispielsweise bei einer Vorschädigung des abzusichernden Geräts oder der elektrischen Leitung auf. In diesem Fall erfolgt mittels des Schutzschalters ein Unterbrechen des Stromflusses, sodass eine weitere Beschädigung vermieden wird.

Zum Unterbrechen des Stromflusses weist der Schutzschalter einen Schalter auf. Somit stellt der Schutzschalter eine Ausbildung eines Schaltgeräts dar. Zur Bereitstellung eines Berührschutzes und zur leichten Montage ist der Schalter dabei innerhalb eines Gehäuses angeordnet. Der Schalter ist beispielsweise als Halbleiterschalter ausgestaltet. Mittels des Halbleiterschalters ist dabei keine galvanische Trennung möglich. In einer Alternative hierzu ist der Schalter daher mechanisch ausgestaltet und in Wirkverbindung mit einem Antrieb, der beispielsweise einen Elektromagneten umfasst. Mittels Bestromung des Antriebs ist es somit möglich, den Schaltzustand des Schalters zu verändern.

Falls dabei bei Betrieb der Schalter einen Defekt aufweist, ist es mittels des Schutzschalters nicht mehr möglich, den elektrischen Strom zu unterbrechen, weswegen mittels des Schutzschalters keine Funktionalität mehr bereitgestellt wird. Zur Erhöhung der Sicherheit ist es daher bekannt, zwei Schalter elektrisch in Reihe zu schalten. Somit ist auch bei einem Defekt eines der Schalter mittels des anderen Schalters ein Unterbrechen des elektrischen Stromflusses möglich. Falls aus Sicherheitsgründen hierbei stets eine galvanische Trennung erreicht werden soll, ist es erforderlich, zwei mechanische Schalter vorzusehen, weswegen eine Baugröße und auch ein Gewicht übermäßig vergrößert sind. Zur Erreichung von funktionaler Sicherheit es erforderlich, dass die beiden Schalter auf unterschiedlichen Techniken basieren, weswegen eine Konstruktion verkompliziert und Herstellungskosten vergrößert sind.

Der Erfindung liegt die Aufgabe zugrunde, ein besonders geeignetes Schaltgerät und ein besonders geeignetes Verfahren zum Betrieb eines Schaltgeräts anzugeben, wobei vorteilhafterweise Herstellungskosten reduziert und/oder eine Sicherheit erhöht ist.

Hinsichtlich des Schaltgeräts wird diese Aufgabe durch die Merkmale des Anspruchs 1 und hinsichtlich des Verfahrens durch die Merkmale des Anspruchs 8 erfindungsgemäß gelöst. Vorteilhafte Weiterbildungen und Ausgestaltungen sind Gegenstand der Unteransprüche.

Das Schaltgerät dient insbesondere dem Schalten eines elektrischen Stroms, also insbesondere dem Erstellen und/oder Unterbrechen eines elektrischen Stromflusses. Hierfür weist das Schaltgerät zweckmäßigerweise zwei Zustände auf, nämlich einen elektrisch leitenden Zustand, der auch als geschlossener Zustand bezeichnet wird. In diesem Fall ist es möglich, mittels des Schaltgeräts den elektrischen Strom zu führen. Bei dem anderen Zustand, der als geöffneter oder elektrisch nichtleitender Zustand bezeichnet wird, ist insbesondere ein elektrischer Stromfluss über das Schaltgerät nicht möglich. Beispielsweise ist das Schaltgerät manuell betätigt/betätigbar, sodass es sich bei dem Schaltgerät um einen Handschalter handelt. Alternativ oder in Kombination hierzu ist es zum Beispiel möglich, das Schaltgerät elektrisch zu betätigen und somit insbesondere aus der Ferne. In einer weiteren Alternative ist das Schaltgerät beispielsweise automatisch betätigt, zweckmäßigerweise in Abhängigkeit von bestimmten Bedingungen.

Geeigneterweise ist das Schaltgerät ein Bestandteil eines Schutzschalters oder ein Schützes. Der Schutzschalter dient zum Beispiel der Absicherung eines Geräts, und der Schutzschalter ist beispielsweise ein Geräteschutzschalter. Alternativ oder in Kombination hierzu dient der Schutzschalter der Absicherung einer Leitung und ist somit ein Leitungsschutzschalter. Insbesondere wird der Schutzschalter in einem Gleichspannungskreis eingesetzt, also zum Beispiel zwischen einer Last und einer Gleichspannungsquelle oder dergleichen, sodass insbesondere ein Stromkreis gebildet ist. Vorzugsweise liegt hierbei im Gleichspannungskreis eine elektrische Gleichspannung zwischen 400 V und 650 V an, also insbesondere höherer Gleichspannung. Vorzugsweise wird der Schutzschalter zur Absicherung eines Aktors bei einer Industrieanlage verwendet. Der Aktor bildet hierbei insbesondere die Last. Zweckmäßigerweise wird der Schutzschalter oder zumindest das Schaltgerät im Bereich der Industrieautomation verwendet. Insbesondere ist die mittels des Schutzschalters / Schaltgeräts geschaltete elektrische Spannung 24 V, 48 V, 380 V, 650 V, 760 V. Bei einer Alternative wird der Schutzschalter zur Absicherung einer Straßenbeleuchtung, eines Schiffsbordnetzes, Bahnanwendungen-Infrastruktur, Bahnanwendungen-Antrieb oder im Bereich der elektrifizierten Luftfahrt verwendet. Bei einer weiteren Alternative wird der Schutzschalter / das Schaltgerät im Ausbau und Integration erneuerbarer Energieerzeuger, bei Inselnetzen, im privaten häuslichen Bereich, in Gewächshäusern, bei der Elektrifizierung straßengebundener Mobilität (Elektromobilität), Landwirtschaft oder bei Baustellenfahrzeugen verwendet. Die verwendet elektrische (Gleich-)Spannung ist dabei zum Beispiel zwischen 1500 V und 3000 V oder beträgt 110 V, 380 V, 400 V 800 V, 1000 V 1500 V, 3000 V. Zusammenfassend wird alternativ zur Anwendung bei einer Industrieanlage der Schutzschalter / das Schaltgerät beispielsweise bei einem Elektrofahrzeug verwendet, wie einem Kraftfahrzeug, einem Flugzeug oder einem Schiff/Boot.

In einer Alternative hierzu ist beispielsweise das Schaltgerät als ein Trennschalter ausgebildet, der auch als Trenner bezeichnet wird. Beispielsweise umfasst das Schaltgerät einen mechanischen Hebel, mittels dessen der Schaltzustand des Schaltgeräts verändert werden kann.

Das Schaltgerät umfasst zwei Anschlüsse, an die im Montagezustand weitere Bestandteile des Stromkreises, zweckmäßigerweise die etwaigen Leitungen, angeschlossen sind. Hierfür sind die Anschlüsse geeignet, insbesondere vorgesehen und eingerichtet. Vorzugsweise ist hierfür an dem jeweiligen Anschluss ein Kabel oder eine Stromschiene angeschlossen, wobei ein Querschnitt dieser zum Beispiel zwischen 10 mm2 und 100 mm2 oder zwischen 25 mm2 und 92 mm2 ist. Der Querschnitt beträgt beispielsweise 16 mm2, 25 mm2 oder 35 mm2. Der Querschnitt ist beispielsweise 6 mm2, zwischen 6mm2 und 16 mm2 oder zwischen 16 mm2 und 50 mm2. Insbesondere sind die Anschlüsse nach Art von Käfigklemmen ausgebildet oder umfassen zumindest diese.

Die beiden Anschlüsse sind mittels eines ersten und zweiten Strompfads elektrisch miteinander verbunden. Dabei sind der erste und der zweite Strompfad elektrisch in Reihe geschaltet. Beispielsweise ist zur elektrischen Verbindung der beiden Anschlüsse lediglich der erste und der zweite Strompfads vorhanden/ausreichend. Alternativ hierzu in diese Reihenschaltung noch mit einem weiteren Strompfad elektrisch in Reihe geschaltet. Zusammenfassend wird, wenn mittels des Schaltgeräts ein elektrischer Strom geführt wird, dieser mittels des ersten und des zweiten. Strompfads geführt, zumindest im Normalbetrieb.

Der erste Strompfad weist einen mechanischen Schalter auf, sodass dieser elektrisch zwischen die beiden Anschlüsse des Schaltgeräts geschalte ist. Somit ist es möglich, mittels des mechanischen Schalters den elektrischen Stromfluss über das Schaltgerät zu schalten. Der mechanische Schalter ist geeigneterweise in einem Gehäuse angeordnet, das vorzugsweise aus einem Kunststoff gefertigt ist. Somit ist ein Berührschutz für den mechanischen Schalter bereitgestellt, und dieser ist auch vor Umgebungseinflüssen geschützt. Zweckmäßigerweise sind die etwaigen Anschlüsse in das Gehäuse eingebracht, sodass eine elektrische Kontaktierung der beiden Strompfade von außerhalb des Gehäuses ermöglicht ist.

Der mechanische Schalter weist eine Stelle zur Unterbrechung des elektrischen Stroms auf, die einen Bewegkontakt umfasst, dem ein Festkontakt zugeordnet ist.

Hierbei ist es möglich, den Bewegkontakt bezüglich des Festkontakts zu bewegen und insbesondere diese aneinander anzulegen und auch zu beabstanden. Wenn der Bewegkontakt an dem Festkontakt anliegt, ist der mechanische Schalter elektrisch leitfähig, sodass über den mechanischen Schalter der elektrische Strom geführt werden kann. Falls hingegen der Bewegkontakt von dem Festkontakt beabstandet ist, ist insbesondere zwischen diesen ein Luftspalt gebildet, oder zumindest ist dann der mechanische Schalter geöffnet und daher elektrisch nicht leitfähig.

Der mechanische Schalter weist beispielsweise lediglich eine Stelle zur Unterbrechung auf. Besonders bevorzugt jedoch ist der mechanische Schalter als Doppelunterbrecher ausgebildet und weist daher zwei Bewegkontakt auf, denen jeweils ein Festkontakt zugeordnet ist. Zweckmäßigerweise umfasst der mechanische Schalter hierfür eine Kontaktbrücke, die beweglich gelagert ist. Hierbei ist die Kontaktbrücke insbesondere transversal beweglich gelagert, und an den gegenüberliegenden Enden ist insbesondere jeweils einer der Bewegkontakte angeordnet.

Das Schaltgerät umfasst ferner einen Halbleiterschalter. Dieser ist ein Bestandteil des zweiten Strompfads und somit elektrisch in Reihe mit dem mechanischen Schalter geschaltet. Wenn dabei der Halbleiterschalter elektrisch nichtleitend ist, ist auch der zweite Strompfad nichtleitend, weswegen über diesen kein elektrischer Strom geführt werden kann. Falls hingegen der Halbleiterschalter elektrisch leitend ist, ist der zweite Strompfad elektrisch leitend, und über den Halbleiterschalter wird der mittels des Schaltgeräts geführte elektrischer Strom geführt.

Das Schaltgerät weist einen Antrieb mit einer ersten Antriebseinheit und einer zweiten Antriebseinheiten auf. Die beiden Antriebseinheiten sind hierbei elektrisch ausgestaltet, sodass mittels Bestromung der mechanische Schalter angetrieben wird. Bei Bestromung jeder der Antriebseinheiten ist es dabei möglich, den Schaltzustand des mechanischen Schalters zu ändern. Beispielsweise ist es hierbei möglich, mittels jeder der Antriebseinheiten den mechanischen Schalter in den geöffneten Zustand zu verbringen, bei dem insbesondere der Bewegkontakt von dem zugeordneten Festkontakt beabstandet ist. Dabei ist zum Öffnen des mechanischen Schalters der Betrieb jeweils einer der Antriebseinheiten ausreichend. Beispielsweise ist es auch möglich, mittels jeder der Antriebseinheiten jeweils separat den mechanischen Schalter in den elektrisch geschlossenen Zustand zu verbringen. Zumindest ist dies bevorzugt mittels der ersten Antriebseinheit möglich. Zum Beispiel ist dies mittels der zweiten Antriebseinheit nicht möglich, weswegen eine Konstruktion vereinfacht ist.

Zweckmäßigerweise umfasst jede Antriebseinheit eine elektrische Spule. Hierbei wird bei Betrieb des Antriebseinheit geeigneterweise ein magnetisches Bauteil, beispielsweise ein Permanentmagnet oder ein ferromagnetisches Bauteil, innerhalb der Spule bewegt. Bevorzugt ist dabei beiden Antriebseinheiten jeweils das gleiche magnetische Bauteil zugeordnet, weswegen Materialkosten und eine Baugröße verringert sind. Das (magnetische) Bauteil ist zweckmäßigerweise an den mechanischen Schalter angebunden, vorzugsweise an der Kontaktbrücke.

Der Antrieb ist zum Beispiel als "Moving Magnet Aktuator" ausgebildet. Dem "Moving Magnet Aktuator" ("Moving Magnet Actuator") ist dabei auch das magnetische Bauteil zugeordnet, das beweglich gelagert ist. Dabei weist der "Moving Magnet Aktuator" die erste Antriebseinheit mit einer oder mehreren elektrischen Spulen auf, wobei bei Bestromung zwischen diesen und dem (magnetischen) Bauteil eine magnetische Wechselwirkung erfolgt. Die elektrischen Spulen sind dabei ortsfest gehalten. Da die elektrische(n) Spule(n) stationär gehalten ist/sind, ist eine Konstruktion vereinfacht, und es sind, mit Ausnahme der für die Lagerung erforderlichen Komponenten keine weiteren beweglich Bauteile oder elektrischen Verbindungen zwischen den beweglichen Bauteilen, nämlich dem Bauteil, und den stationären Bauteilen des "Moving Magnet Aktuators", der im Weiteren auch lediglich als Aktuator bezeichnet ist, erforderlich. Somit ist auch eine Reibung verringert.

Vorzugsweise umfasst die erste Antriebseinheit zwei elektrische Spulen, die zum Beispiel baugleich sind. Zumindest jedoch sind die beiden elektrischen Spulen zueinander entlang einer Längsachse versetzt und konzentrisch zu dieser angeordnet. Das Bauteil befindet sich dabei insbesondere auf der Längsachse und ist entlang dieser beweglich gelagert. Dabei befindet sich bei einem Schaltzustand des mechanischen Schalters das Bauteil in einem zwischen den beiden elektrischen Spulen vorhandenen Luftspalt und wird dort beispielsweise mittels eines magnetischen Kurzschlussblechs gehalten. Im anderen Schaltzustand hingegen ist das Bauteil entlang der Längsachse versetzt.

Die zweite Antriebseinheit umfasst ebenfalls entsprechend elektrische Spulen, wobei insbesondere mittels jeder elektrischen Spule der zweite Antriebseinheit jeweils eine der elektrischen Spulen der ersten Antriebseinheit umgeben ist, sodass diese jeweils konzentrisch zueinander sind. Somit ist auch mittels der zweiten. Antriebseinheit eine elektrische Wechselwirkung mit dem (magnetischen) Bauteil realisierbar, wobei der Antrieb vergleichsweise kompakt ist. Auch ist mittels der beiden Antriebseinheiten jeweils separat der mechanische Schalter betätigbar.

Da die Anzahl der beweglichen Bestandteile des "Moving Magnet Aktuators", insbesondere lediglich das Bauteil, vergleichsweise gering ist, und diese insbesondere ein vergleichsweises geringes Gewicht aufweisen, ist eine Dynamik des Aktuators vergleichsweise hoch. Somit ist eine Trägheit beim Betätigen des mechanischen Schalters verringert. Infolgedessen ist mittels des Schaltgeräts ein vergleichsweises schnelles Schalten ermöglicht.

Das Schaltgerät weist ferner eine Steuereinheit auf. Mittels der Steuereinheit ist dabei der Antrieb, nämlich die erste Antriebseinheit bestromt. Mit anderen Worten ist es möglich, mittels der Steuereinheit die erste Antriebseinheit, insbesondere eine der ersten Antriebseinheit zugeordnete elektrische Spule, zu bestromen, wofür an diese zweckmäßigerweise eine elektrische Spannung angelegt wird. Hierfür ist die erste Antriebseinheit insbesondere elektrisch mit der Steuereinheit verbunden.

Beispielsweise werden mittels der Steuereinheit noch weitere Funktionen übernommen, insbesondere das Erfassen einer Aufforderung zum Ändern des Schaltzustands des Schaltgeräts, zum Beispiel eine Aufforderung zum Beginn oder zum Beenden eines Führens des elektrischen Stroms mittels des Schaltgeräts. Beispielsweise erfolgt hierbei mittels des Schaltgeräts zudem eine Überwachung des mittels des Schaltgeräts geführten elektrischen Stroms. Geeigneterweise umfasst das Steuergerät eine Schnittstelle zur signaltechnischen Verbindung mit weiteren Komponenten, beispielsweise des etwaigen Schutzschalters und/oder des Stromkreises, indem das Schaltgerät eingesetzt wird. Zusammenfassend wird der Antrieb zumindest teilweise mittels der Steuereinheit bestromt.

Die zweite Antriebseinheit ist insbesondere unabhängig von der Steuereinheit und elektrisch parallel zu dem zweite Strompfad geschaltet. Vorzugsweise ist hierbei kein zusätzlicher Schalter oder dergleichen vorhanden, sodass der elektrische Stromfluss über die zweite Antriebseinheit erfolgt, wenn der zweite Strompfad elektrisch nichtleitend, jedoch der erste Strompfad elektrisch leitend ist. Dabei wird mittels der zweiten Antriebseinheit ein elektrischer Widerstand bereitgestellt, zumindest aufgrund der etwaigen elektrischen Spule. Falls somit das Schaltgerät und daher auch der Halbleiterschalter sich in dem elektrisch leitenden Zustand befinden, wird der zwischen den Anschlüssen geführte elektrische Strom vorwiegend über den Halbleiterschalter und nicht oder lediglich in vergleichsweise geringem Maße über die zweite Antriebseinheit geführt. Zweckmäßigerweise ist dabei das Schaltgerät derart ausgebildet, dass wenn der Halbleiterschalter elektrisch leitend ist, der mittels der zweiten Antriebseinheit geführte elektrische Strom nicht ausreichend ist, den mechanischen Schalter zu betätigen. Mit anderen Worten wird mittels der zweiten Antriebseinheit gegebenenfalls ein Magnetfeld erzeugt, das jedoch zu gering ist, um das etwaige magnetische Bauteil gegenüber einer mechanischen Reibung des Schalters oder sonstiger auf den mechanischen Schalter wirkende Kräfte, zum Beispiel Federkräfte, zu bewegen.

Das Schaltgerät ist dabei derart ausgebildet, dass der mechanische Schalter in den geöffneten Zustand überführt wird, wenn mittels der zweiten Antriebseinheit ein vorbestimmter elektrischer Strom geführt wird. Mit anderen Worten wird bei dem vorbestimmten elektrischen Strom zweckmäßigerweise ein ausreichend starkes Magnetfeld erzeugt, sodass der mechanische Schalter geöffnet wird. Insbesondere ist dabei die zweite Antriebseinheit derart ausgebildet. Zweckmäßigerweise ist die zweite Antriebseinheit derart mit dem zweite Strompfads verschaltet.

Das Schaltgerät ist für einen Nennstrom ausgelegt. Mit anderen Worten ist es möglich, über das Schaltgerät einen elektrischen Strom mit bis zu einer Höhe des Nennstroms zu führen, ohne dass hierbei eine Beschädigung auftritt. Dabei ist eine Zeitspanne, für die mittels des Schaltgeräts dieser elektrische Strom geführt werden kann, im Wesentlichen unbegrenzt. Bei einem vergrößerten elektrischen Strom erfolgt beispielsweise eine Beschädigung des Schaltgerät, zum Beispiel sofort, oder zumindest nach einer kurzen Zeitspanne. Besonders bevorzugt, ist es dabei möglich, mittels des Steuergeräts einen elektrischen Strom zu führen, der größer als der Nennstrom ist, zumindest für die kurze Zeitspanne, die insbesondere kleiner als 10 Sekunden oder 5 Sekunden ist. Falls hingegen ein längeres Führen erfolgt, erfolgt zum Beispiel eine Beschädigung des Schaltgeräts, zumindest wenn der elektrische Strom größer als der Nennstrom zuzüglich einer etwaigen Toleranz ist, wie 20 %. Mit anderen Worten ist es zwar möglich, mittels des Schaltgeräts einen Überstrom oder Kurzschlussstrom zu führen, jedoch lediglich für die vergleichsweise kurze Zeitspanne, und nach dieser erfolgt eine Zerstörung oder zumindest eine reversible Veränderung des Schaltgeräts.

Aufgrund des Nennstroms ist somit bekannt, wie das Schaltgerät verwendet werden kann, und die einzelnen Komponenten des Schaltgeräts sind hierauf abgestimmt. Somit ist für den Hersteller des Schaltgeräts abschätzbar, welche Komponenten hierfür erforderlich sind. Zusammenfassend ist es somit der mechanische Schalter und der Halbleiterschalter derart ausgelegt, dass mittels dieser der Nennstrom für im Wesentlichen eine unbegrenzte Zeitspanne geführt werden kann. Auch kann mittels der zweiten Antriebseinheit der Nennstrom für eine unbeschränkte Zeitspanne geführt werden.

Die Steuereinheit ist beispielsweise ebenfalls auf den Nennstrom ausgelegt, und beispielsweise über einen Stromwandler mit zumindest mit einem der Strompfade elektrisch kontaktiert. Somit wird mittels der Steuereinheit nicht in der Nennstrom geführt, sondern ein reduzierter Strom, jedoch ist insbesondere der Stromwandler hierauf ausgelegt. Alternativ hierzu erfolgt die Bestromung der Steuereinheit mittels einer sekundären Spannungsquelle, insbesondere über Hilfsanschlüsse. Das Schaltgerät ist dabei zweckmäßigerweise derart ausgebildet, dass an den Hilfsanschlüssen eine elektrische Spannung kleiner als 60 Volts angelegt wird, insbesondere 24 V oder 12 V, sodass eine Bestromung der Steuereinheit erfolgt. Zur Bestromung der ersten Antriebseinheit wird mittels der Steuereinheit insbesondere die an den Hilfsanschlüssen anliegende elektrische Spannung angelegt.

Der vorbestimmte elektrische Strom, der zum Bestätigen des mechanischen Schalters führt, wenn dieser mittels der zweiten Antriebseinheit geführt wird, ist dabei kleiner als das Dreifache des Nennstroms. Mit anderen Worten wird, wenn mittels zwischen den beiden Anschlüssen der vorbestimmte Strom geführt wird, jedoch der Halbleiterschalter geöffnet ist, der Antrieb aufgrund der zweiten Antriebseinheit derart betätigt, dass der mechanische Schalter in den geöffneten Zustand überführt wird. Infolgedessen bricht somit der elektrische Stromfluss über den mechanischen Schalter und daher auch über das Schaltgerät zusammen. Dabei ist der vorbestimmte elektrische Strom kleiner als ein Überstrom oder Kurzschlussstrom. Mit anderen Worten ist der vorbestimmte elektrische Strom, der auch lediglich als vorbestimmter Strom bezeichnet ist, geringer als der Überstrom oder Kurzschlussstrom, und der vorbestimmte Strom wird beispielsweise in einem Normalbetrieb des Schaltgeräts auch erreicht, also wenn kein Fehlerfall vorliegt, beispielsweise des Schaltgeräts und/oder des Stromkreises, in dem das Schaltgerät eingesetzt wird. Zusammenfassend kann die zweite Antriebseinheit somit den vorbestimmten elektrischen Strom tragen, zumindest für eine bestimmte Zeitdauer. Geeigneterweise ist die zweite Antriebseinheit für den vorbestimmten elektrischen Strom oder zumindest für den Nennstrom ausgelegt.

Aufgrund einer derartigen Ausgestaltung ist es somit möglich, den elektrischen Strom über das Schaltgerät auf unterschiedliche Weise zu unterbrechen. Nämlich einerseits entweder mittels direkter Bestromung der erstem Antriebseinheit mittels der Steuereinheit. Dies erfolgt insbesondere in einem Normalbetrieb, also wenn mittels des Schaltgeräts in gewünschter Art und Weise der elektrische Strom unterbrochen werden soll.

Falls jedoch die erste Antriebseinheit beschädigt ist, besteht der elektrische Stromfluss über den ersten Strompfad und den zweiten Strompfad noch weiter fort. In diesem Fall ist es möglich, den Halbleiterschalter zu betätigen. In diesem Fall ist es möglich, den Halbleiterschalter zu betätigen, nämlich in den elektrisch nichtleitenden Zustand zu versetzen, sodass der elektrische Strom nicht mehr über den zweite Strompfad geführt wird und auf die zweite Antriebseinheit kommutiert. Daher wird dennoch der mechanische Schalter wird. Folglich werden die beiden Anschlüsse galvanisch zueinander getrennt, auch wenn die erste Antriebseinheit einen Fehler aufweist. Somit ist eine Sicherheit erhöht. Hierbei ist es nicht erforderlich, zwei mechanische Schalte, zwei Antriebe und zwei Steuereinheiten vorzusehen. Somit ist eine Baugröße verringert, und Herstellungskosten sind reduziert.

Beispielsweise ist der Halbleiterschalter zum bidirektionalen Schalten vorgesehen. Alternativ hierzu umfasst der zweite Strompfad zwei Halbleiterschalter, mittels derer der elektrische Strom lediglich in eine Stromrichtung unterbrochen werden, die zueinander elektrisch in Reihe, jedoch antiparallel zueinander geschaltet sind. Infolgedessen ist es möglich, mittels jedes der beiden Halbleiterschalter den elektrischen Strom über den zweite Strompfad in jeweils eine der beiden möglichen Stromrichtungen zu unterbrechen. Infolgedessen ist es möglich, das Schaltgerät im Wesentlichen beliebig zu montieren und/oder auch einen etwaigen Rückstrom bei einer Verwendung in einem Gleichstromkreis zu unterbrechen.

Die zweite Antriebseinheit umfasst vorzugsweise über einen Gleichrichter über den die elektrische(n) Spule(n) mit dem zweiten Strompfad elektrisch kontaktiert sind. Somit ist sichergestellt, dass durch die elektrische Spule(n) der elektrische Strom stets in die gleiche Richtung fließt, unabhängig von der Polarität der an den Anschlüssen anliegenden elektrischen Spannung. Dabei kann mittels der zweiten Antriebseinheit der mechanische zumindest in den geöffneten Zustand überführt werden.

Beispielsweise umfasst der zweite Strompfad einen Gleichrichter, über den der Halbleiterschalter mit den Anschlüssen elektrisch kontaktiert ist. Aufgrund des Gleichrichters ist somit sichergestellt, dass der elektrische Strom über den Halbleiterschalter stets in eine einzige Richtung fließt, unabhängig von der Richtung des zwischen den Anschlüssen geführten elektrischen Stroms. Somit ist eine Sicherheit erhöht und es ist lediglich ein entsprechender Halbleiterschalter erforderlich. Vorzugsweise sind auch in diesem Fall zumindest zwei entsprechende Halbleiterschalter vorhanden, die elektrisch in Reihe geschaltet sind. Dabei ist die Schaltrichtung der beiden Halbleiterschalter zueinander gleich. Somit ist eine Art Kaskode, wobei mittels jedes Halbleiterschalters eine verringerte elektrische Spannung geschaltet wird, um den elektrischer Stromfluss über den zweiten Strompfad zu unterbrechen. Somit sind Anforderungen an die Halbleiterschalter und daher auch Herstellungskosten reduziert. Zweckmäßigerweise sind dabei die Halbleiterschalter mittels eines jeweiligen Widerstands überbrückt, sodass ein Spannungsteiler realisiert ist. Alternativ oder in Kombination hierzu ist der Halbleiterschalter oder die Halbleiterschalter mittels eines jeweiligen Varistors überbrückt, sodass eine maximal daran anliegende elektrische Spannung begrenzt ist. Infolgedessen erfolgt auch bei einer elektrischen Überspannung keine Zerstörung des/der Halbleiterschalters.

Beispielsweise ist der vorbestimmte elektrische Strom kleiner als das Zweifache des Nennstroms. Somit ist es möglich, mittels der zweiten Antriebseinheit einen erhöhten elektrischen Strom zu führen, ohne dass der mechanische Schalter geöffnet wird. Dabei wird dennoch der mechanische Schalter sicher in den geöffneten Zustand überführt, wenn ein übermäßig hoher elektrischer Strom mittels des Schaltgeräts, insbesondere der zweiten Antriebseinheit, geführt wird. Alternativ oder in Kombination hierzu ist der vorbestimmte elektrische Strom größer als die Hälfte des Nennstroms. Falls somit lediglich ein vergleichsweise geringer elektrischer Strom mittels des Schaltgeräts geführt wird und der Halbleiterschalter sich in dem elektrisch nichtleitenden Zustand befindet, beispielsweise aufgrund einer Fehlfunktion oder verspäteten Ansteuerung, wird der mechanische Schalter nicht betätigt. Dies erfolgt insbesondere erst, wenn der mittels des Schaltgeräts geführte elektrische Strom vergleichsweise groß ist, und zu einer Beschädigung oder einem unerwünschten Verhalten führen könnte.

Besonders bevorzugt beträgt der vorbestimmte elektrische Strom dem Nennstrom oder ist geringfügig kleiner. Infolgedessen ist es möglich, die zweite Antriebseinheit auch im Normalbetrieb zum Stromlosschalten des Schaltgeräts zu verwenden, also insbesondere auch wenn, beispielsweise mit Ausnahme der ersten Antriebseinheit, in dem Stromkreis, in dem das Schaltgerät eingesetzt wird, keine sonstige Fehlfunktion oder ein Fehlerfall vorliegt.

Beispielsweise ist der Halbleiterschalter selbstleitend oder bistabil. Besonders bevorzugt jedoch ist der Halbleiterschalter selbstsperrend ausgebildet. Zweckmäßigerweise ist der Halbleiterschalter ein n-Kanal MOSFET oder ein IGBT. Falls somit keine geeignete Ansteuerung des Halbleiterschalters erfolgt oder erfolgen kann, zum Beispiel, da bei dem Halbleiterschalter, der Ansteuerung und/oder der Ansteuerung des Halbleiterschalters (auch) eine Fehlfunktion vorliegen sollte, wird dieser selbstständig in den elektrisch nicht leitenden Zustand überführt, sodass nachfolgend der etwaige zwischen den Anschlüssen geführte elektrische Strom mittels der Antriebseinheit geführt wird, weswegen anschließend der mechanische Schalter geöffnet wird. Mit anderen Worten wird, wenn der Halbleiterschalter eine Fehlfunktion aufweist, im Wesentlichen selbstständig der mechanische Schalter geöffnet, was eine Sicherheit erhöht. Dies erfolgt dabei unabhängig davon, ob der Antrieb, insbesondere die erste Antriebseinheit, auch eine Fehlfunktion aufweist.

Beispielsweise ist der Halbleiterschalter mittels einer separaten eine Baueinheit betrieben. Besonders bevorzugt jedoch wird für den Betrieb des Halbleiterschalters die Steuereinheit verwendet, mittels derer auch die erste Antriebseinheit bestromt ist. Somit ist eine Anzahl an erforderlichen Bauteilen verringert. Auch ist es somit insbesondere möglich, im Wesentlichen zeitgleich zu dem Bestromen der erste Antriebseinheit auch den Halbleiterschalter derart anzusteuern, dass dieser in den elektrisch nichtleitenden Zustand überführt wird. Hierfür sind die erste Antriebseinheit, die Steuereinheit und der Halbleiterschalter zweckmäßigerweise geeignet miteinander verschaltet. Somit ist ein Aufwand und eine Komplexität verringert. Geeigneterweise ist dabei der Halbleiterschalter selbstsperrend ausgebildet, sodass bei einer Fehlfunktion oder einem Ausfall der Steuereinheit, aufgrund derer dann auch keine geeignete Ansteuerung des Antriebs mehr erfolgen kann, die zweite Antriebseinheit derart betätigt wird, dass der mechanische Schalter geöffnet wird.

Beispielsweise ist das Schaltgerät im Wesentlichen lediglich mittels der Steuereinheit, des ersten Strompfads und des zweiten Strompfad gebildet, also insbesondere mittels der Steuereinheit, des Halbleiterschalters, des mechanischen Schalters und des Antriebs. Besonders bevorzugt jedoch umfasst der zweite Strompfad einen Stromsensor, der elektrisch in Reihe mit dem Halbleiterschalter geschaltet ist. Insbesondere ist dabei der Stromsensor als Shunt ausgebildet und weist einen Messwiderstand auf. Zweckmäßigerweise ist in dabei der Halbleiterschalter mit dem Stromsensor und der Steuereinheit derart verschaltet, oder zumindest ist das das Schaltgerät derart ausgebildet, dass wenn die erste Antriebseinheit bestromt wird, jedoch weiterhin der elektrische Strom über den zweiten Strompfad besteht, der Halbleiterschalter in den elektrisch nichtleitenden Zustand verbracht wird. Aufgrund des Stromsensors ist es somit insbesondere möglich, zu überprüfen, ob nach dem Bestromen der ersten Antriebseinheit der mechanische Schalter geöffnet wurde.

Alternativ oder in Kombination zu dem Stromsensor ist beispielsweise an dem mechanischen Schalter ein Signalkontakt angebunden oder in Wirkverbindung, der insbesondere zwangsgeführt ist. Auch somit ist es insbesondere möglich, eine Stellung des etwaigen Bewegkontakt zu dem Festkontakt zu ermitteln. Alternativ oder in Kombination hierzu ist ein Spannungssensor oder dergleichen vorhanden, mittels dessen die über den mechanischen Schalter anfallende elektrische Spannung erfasst wird. Zumindest ist auch mittels des Spannungssensors ermittelbar, ob der mechanische Schalter geöffnet ist, und insbesondere, ob eine Fehlfunktion der ersten Antriebseinheit vorliegt. Somit ist eine mehrfache Überwachung möglich, ob das Schaltgerät ordnungsgemäß funktioniert, was eine Sicherheit weiter erhöht.

Vorzugsweise umfasst der zweite Strompfad eine Sicherung, die elektrisch in Reihe mit dem Halbleiterschalter geschaltet ist. Die Sicherung ist insbesondere eine Schmelzsicherung. Zweckmäßigerweise ist die Sicherung derart ausgebildet, dass diese bei Erreichen des vorbestimmten elektrischen Stroms oder eines darüberliegenden elektrischen Stroms ausgelöst wird, sodass der elektrische Strom über den zweiten Strompfad unterbrochen wird. Zusammenfassend ist insbesondere der elektrische Strom, ab dem ein Durchbrennen/Auslösen der Sicherung erfolgt, kleiner als der vorbestimmte elektrische Strom. Wenn dann der elektrische Strom auf die zweite Antriebseinheit kommutiert, reicht dieser aus, dass der mechanische Schalter geöffnet wird. Aufgrund des dann geöffneten mechanischen Schalters ist die galvanische Trennung im Vergleich zu lediglich der Verwendung der Sicherung verbessert, bei der vorhandene Abbrandpartikel auch weiterhin einen elektrischen Stromfluss ermöglichen können.

Beispielsweise ist elektrisch in Reihe zu dem ersten Strompfads lediglich der zweite Strompfad geschaltet. Alternativ oder in Kombination hierzu ist zu der zweiten Antriebseinheit lediglich der zweite Strompfad geschaltet. Besonders bevorzugt jedoch sind mehrere zweite Strompfade vorhanden, die zueinander und auch zu der zweiten Antriebseinheit elektrisch parallel und somit jeweils elektrische in Reihe zu dem ersten Strompfad geschaltet sind. Infolgedessen wird der mittels des ersten Strompfads geführte elektrische Strom auf die einzelnen zweiten Strompfade aufgeteilt, weswegen der mittels jedes der zweiten Strompfade jeweils geführte elektrische Strom reduziert ist. Dabei weist jeder zweite Strompfad jeweils den Halbleiterschalter auf, und insbesondere sind sämtliche Halbleiterschalter mit einer gemeinsamen Steuerleitung beaufschlagt, sodass diese stets zeitgleich betätigt werden. Aufgrund der der Aufteilung des elektrischen Stroms auf die zweiten Strompfade sind die Anforderungen an die Halbleiterschalter reduziert, weswegen trotz der Mehrzahl an Halbleiterschalter dennoch Herstellungskosten reduziert sind.

Falls dabei beispielsweise aufgrund einer weiteren Fehlfunktion nicht sämtliche Halbleiterschalter in den elektrisch nichtleitenden Zustand versetzt werden, steigt, wenn zumindest einige der Halbleiterschalter elektrisch nichtleitend sind, der mittels der zweiten Antriebseinheit geführt elektrische Strom an, sodass der mechanische Schalter geöffnet wird. Somit ist eine weitere Redundanz gegeben und eine Sicherheit erhöht.

Besonders bevorzugt ist dabei auch jedem zweiten Strompfad die jeweilige Sicherung zugeordnet, wobei die Auslöseschwelle für die Sicherungen auf den jeweiligen zweite Strompfad angepasst ist. Falls somit beispielsweise der elektrische Strom ansteigt, jedoch ein Betrieb der ersten Antriebseinheit nicht mehr möglich ist, wird zumindest eine der Sicherungen ausgelöst. Infolgedessen kann über diesen zweiten Strompfad kein elektrischer Strom mehr geführt werden, weswegen der über die verbleibenden zweiten Strompfade geführt elektrische Strom ansteigt, weswegen bei diesen, zumindest sukzessive, die Sicherungen ausgelöst werden. Dies erfolgt solange, bis mittels der zweite Antriebseinheit der vorbestimmte elektrische Strom geführt wird, sodass der mechanische Schalter geöffnet wird. Somit ist eine Sicherheit weiter erhöht.

In einer Weiterbildung ist beispielsweise parallel zu dem mechanischen Schalter ein Halbleiterschalter geschaltet. Insbesondere wird dieser in den elektrisch leitenden Zustand versetzt, bevor die erste Antriebseinheit bestromt wird. Somit kommutiert der elektrische Strom auf den weiteren Halbleiterschalter, der nachfolgend wieder in den elektrisch nichtleitenden Zustand versetzt wird, nämlich wenn der mechanische Schalter bereits offen ist. Somit ist ein lichtbogenfreies Schalten des Schaltgeräts ermöglicht.

Das Verfahren dient dem Betrieb eines Schaltgeräts, das für einen Nennstrom ausgelegt ist, und das zwei Anschlüsse umfasst, die mittels eines ersten Strompfads und eines zweiten Strompfads elektrisch verbunden sind, die elektrisch in Reihe geschaltet sind. Der erste Strompfad weist einen mechanischen Schalter und der zweite Strompfad einen Halbleiterschalter auf. Der mechanische Schalter ist mit einem Antrieb angetrieben, der eine erste Antriebseinheit, die mit einer Steuereinheit bestromt ist, und eine zweite Antriebseinheit aufweist, die parallel zu dem zweiten Strompfad geschaltet ist. Das Schaltgerät ist derart ausgebildet, dass der mechanische Schalter in einen geöffneten Zustand überführt wird, wenn mittels der zweiten Antriebseinheit ein vorbestimmter elektrischer Strom geführt wird, der kleiner als das Dreifache des Nennstroms ist.

Bei dem Verfahren wird eine Aufforderung zum Unterbrechen eines über das Schaltgerät geführten elektrischen Stroms mittels der Steuereinheit erfasst. Beispielsweise besteht hierbei eine signaltechnische Verbindung, insbesondere über eine Schnittstelle, mit weiteren Bestandteilen eines Stromkreises, in dem das Schaltgerät eingesetzt wird. Besonders bevorzugt wird dabei die Aufforderung mittels einer übergeordneten Prozesssteuerung oder dergleichen bereitgestellt, also insbesondere im Normalbetrieb. Alternativ hierzu wird die Aufforderung beispielsweise mittels der Steuereinheit selbst erstellt, zum Beispiel einen separaten/anderen Teil. Alternativ oder in Kombination hierzu wird die Aufforderung in Abhängigkeit von Messdaten eines Sensors erstellt, zweckmäßigerweise wenn anhand dieser ein Fehlerfall erkannt wurde, wie ein Über- oder Kurzschlussstrom.

Nach dem Erfassen der Aufforderung wird mittels der Steuereinheit die erste Antriebseinheit derart bestromt, dass der mechanische Schalter in den geöffneten Zustand überführt wird, weswegen die beiden Anschlüsse insbesondere galvanisch zueinander getrennt werden. Zweckmäßigerweise wird dabei, zumindest zunächst, der Halbleiterschalter in dem elektrisch leitenden Zustand belassen. Somit wird insbesondere während des Normalbetriebs zum Unterbrechen des elektrischen Stroms der mechanische Schalter herangezogen. Vorzugsweise erfolgt dabei die galvanische Trennung, weswegen eine Sicherheit erhöht ist. Geeigneterweise wird dabei das Verfahren zumindest teilweise mittels der Steuereinheit durchgeführt. Bevorzugt wird das Verfahren durchgeführt oder gestartet, wenn das Schaltgerät stromführend ist.

Zweckmäßigerweise wird nach, oder zumindest während, dem Bestromen der ersten Antriebseinheit der Halbleiterschalter in dem elektrisch leitenden Zustand belassen. Vorzugsweise wird nach dem Bestromen der erste Antriebseinheit, oder zumindest dann, wenn dies bereits für eine Zeitspanne erfolgt ist, überprüft, ob auch weiterhin der elektrische Strom geführt wird. Zweckmäßigerweise wird dafür ein elektrisch in Reihe mit dem Halbleiterschalter geschalteter Stromsensor verwendet. Alternativ oder in Kombination hierzu wird bestimmt, dass noch weiterhin der elektrische Strom geführt wird, wenn ein dem mechanischen Schalter zugeordneter Signalkontakt anzeigt, dass der mechanische Schalter noch weiterhin geschlossen ist.

Wenn noch weiterhin der elektrische Strom geführt wird, wird der Halbleiterschalter in den elektrisch nichtleitenden Zustand überführt, sodass der zwischen den Anschlüssen weiterhin bestehen elektrische Strom mittels der zweite Antriebseinheit geführt wird. Infolgedessen wird der mechanische Schalter entsprechend angetrieben wird. Somit erfolgt auch dann, wenn die erste Antriebseinheit fehlerhaft ist, ein sicheres Abschalten, wenn die Aufforderung besteht. Die zweite Antriebseinheit und der Halbleiterschalter werden somit im Wesentlichen lediglich dann verwendet, wenn ein Fehler der ersten Antriebseinheit besteht. Somit sind deren erforderlich Verwendungsdauern und daher auch Herstellungskosten reduziert.

Beispielsweise wird die erste Antriebseinheit lediglich dann bestromt, wenn die Aufforderung besteht. Besonders bevorzugt wird unabhängig von der Aufforderung die erste Antriebseinheit mittels der Steuereinheit derart bestromt, dass der mechanische Schalter in den geöffneten Zustand überführt wird. Dies erfolgt dabei jedoch lediglich dann, wenn eine bestimmte Bedingung vorliegt. Die bestimmte Bedingung liegt dabei beispielsweise stets vor, wenn eine Zeitspanne abgelaufen ist, die beispielsweise länger als 10 Minuten, 1 Stunde oder ein Tag ist. Zweckmäßigerweise ist die Zeitspanne kleiner als 1 Monat oder 1 Woche. Nach dem Bestromen der ersten Antriebseinheit wird überprüft, ob der elektrische Strom unterbrochen wurde. Wenn dies der Fall ist, wird anschließend die erste Antriebseinheit mittels der Steuereinheit derart bestromt, dass der mechanische Schalter erneut in den geschlossenen Zustand überführt wird, sodass mittels des Schaltgeräts wieder der elektrische Strom geführt wird.

Aufgrund des Unterbrechens des elektrischen Stromflusses wird somit eine über das Schaltgerät bestromte Last kurzzeitig nicht bestromt, wobei dies zweckmäßigerweise geringer als 1 Sekunde oder 100 ms ist. Wenn die Last eine Kapazität, wie einen Kondensator, aufweist, wird dieser kurzzeitige Einbruch des elektrischen Stroms abgefangen, weswegen die Last auch weiterhin betrieben werden kann.

Falls nach dem Bestromen der erste Antriebseinheit weiterhin der elektrische Strom besteht, wird der Halbleiterschalter in den elektrisch nichtleitenden Zustand überführt, sodass die zweite Antriebseinheit bestromt und daher der mechanische Schalter geöffnet wird. In diesem Fall wird nachfolgend insbesondere der Antrieb gesperrt, und eine Fehlermeldung ausgegeben. Somit wird die Funktionsfähigkeit des Schaltgeräts überprüft, und ein Fehlerfall des Schaltgeräts wird frühzeitig festgestellt, insbesondere bevor eine sonstige Fehlfunktion in dem etwaigen Stromkreis auftritt.

Zweckmäßigerweise liegt die (bestimmte) Bedingung periodisch vor, sodass periodisch überprüft wird, ob ein fehlerloses Öffnen des mechanischen Schalters mittels der ersten Antriebseinheit möglich ist. Infolgedessen wird vergleichsweise früh festgestellt, ob eine Fehlfunktion vorliegt, was eine Sicherheit erhöht. Alternativ oder in Kombination hierzu ist die bestimmte Bedingung erfüllt, wenn festgestellt wurde, dass eine Fehlfunktion / ein Fehlerfall vorliegt.

Besonders bevorzugt wird das Schaltgerät zur Gleichspannungs- und/oder Gleichstromunterbrechung verwendet. Zweckmäßigerweise wird das Schaltgerät in einem Kraftfahrzeug oder einer Industrieanlage verwendet. Die Erfindung betrifft dabei auch die entsprechende Verwendung des Schaltgerät, das bevorzugt ein Bestandteil eines Schutzschalter ist. Auch betrifft die Erfindung einen Stromkreis, der ein derartiges Schaltgerät aufweist. Hierbei umfasst der Stromkreis zweckmäßigerweise eine Gleichspannungsquelle sowie eine Last. Insbesondere ist der Stromkreis ein Bestandteil eines Kraftfahrzeugs. Die Gleichspannungsquelle ist zum Beispiel ein Energiespeicher, wie eine Hochvoltbatterie. Alternativ ist die Gleichspannungsquelle ein Gleichrichter. Zweckmäßigerweise ist die Last ein Elektromotor oder zumindest ein Antrieb, der den Elektromotor umfasst.

Das Schaltgerät ist zweckmäßigerweise ein Bestandteil eines Schutzschalters. Hierbei wird die erste Antriebseinheit geeigneterweise in Abhängigkeit einer Auslösekennlinie betrieben. Vorzugsweise wird hierbei der mechanische Schalter mittels der ersten Antriebseinheit geöffnet, wenn ein elektrischer Strom für eine bestimmte Zeitspanne geführt wurde, die mittels der Auslösekennlinie vorgegeben ist. Zweckmäßigerweise ist hierbei ein Sensor zum Erfassen des mittels des Schutzschalters geführten elektrischen Stroms vorhanden. Der Sensor umfasst vorzugsweise einen Shunt. Die Erfindung betrifft auch einen derartigen Schutzschalter.

Die im Zusammenhang mit dem Schaltgerät erläuterten Weiterbildungen und Vorteile sind sinngemäß auch auf das Verfahren / die Verwendung / den Stromkreis / den Schutzschalter sowie untereinander zu übertragen und umgekehrt.

Nachfolgend wird ein Ausführungsbeispiel der Erfindung anhand einer Zeichnung näher erläutert. Darin zeigen:
- Fig. 1: schematisch einen Stromkreis mit einer Last und einem Schaltgerät,
- Fig. 2: einen vereinfachten Schaltplan des Schaltgeräts, und
- Fig. 3: ein Verfahren zum Betrieb des Schaltgeräts.

Einander entsprechende Teile sind in allen Figuren mit den gleichen Bezugszeichen versehen.

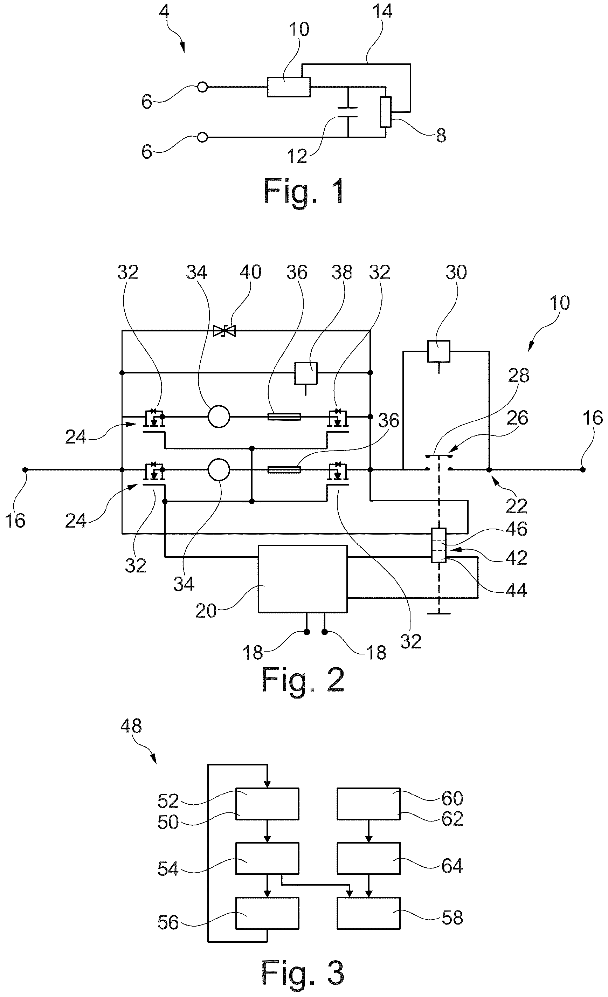

In Figur 1 ist schematisch vereinfacht ein Stromkreis 2 dargestellt, der eine Gleichspannungsquelle 4 mit zwei Polen 6 umfasst. Mittels der Gleichspannungsquelle 4 wird eine elektrische Gleichspannung von 650 V bereitgestellt, die zwischen den beiden Polen 6 anliegt und mittels derer eine Last 8 versorgt ist, die über ein Schaltgerät 10 mit einem der Pole 6 und mit dem anderen direkt verbunden ist. Parallel zu der Last 8 ist eine Kapazität 12 geschaltet, die einen elektrischen Kondensator umfasst. Die Last 8 und das Schaltgerät 10 sind mittels einer Signalleitung 14 signaltechnisch verbunden, sodass zwischen diesen Daten/Informationen ausgetauscht werden können.

In Figur 2 ist ein vereinfachter Schaltplan des Schaltgeräts 10 schematisch gezeigt. Das Schaltgerät 10 weist zwei Anschlüsse 16 auf, die jeweils an eine Leitung des Stromkreises 2 angeschlossen sind. Dabei ist einer der Anschlüsse 16 mit einem der Pole 6 der Gleichspannungsquelle 4 und der andere mit der Last 8 sowie der Kapazität 12 elektrisch verbunden. Die Anschlüsse 16 sind in ein nicht näher dargestelltes Gehäuse eingebracht, mittels derer die weiteren Bestandteile des Schaltgeräts 10 umgeben sind.

In das Gehäuse sind zudem zwei Hilfsanschlüsse 18 eingebracht, die mit einer nicht näher dargestellten sekundären Gleichspannungsquelle elektrisch kontaktiert sind. Mittels dieser wird eine elektrische Gleichspannung in Höhe von 12 V oder 24 V bereitgestellt, die somit an den Hilfsanschlüssen 18 bei Betrieb anliegt. Mit den Hilfsanschlüssen 18 ist eine Steuereinheit 20 elektrisch kontaktiert, die somit über die Hilfsanschlüsse 18 bestromt wird. Zudem ist die Steuereinheit 20 signaltechnisch mit der Signalleitungen 14 über eine nicht näher dargestellte Schnittstelle des Steuergeräts 10 verbunden.

Zwischen den Anschlüssen 16 sind ein erster Strompfad 22 und mehrere zweite Strompfade 24 geschaltet, wobei das dargestellte Beispiel zwei derartige zweite Strompfade 24 umfasst. Die zweiten Strompfade 24 sind elektrisch zueinander parallelgeschaltet. Der erste Strompfad 22 ist elektrisch in Reihe zu jedem der zweiten Strompfade 24 geschaltet, und die beiden Anschlüsse 16 sind mittels des ersten Strompfads 22 sowie der zweiten Strompfade 24 elektrisch miteinander verbunden. Sofern somit über das Schaltgerät 10 ein elektrischer Strom geführt wird, wird dieser vollständig über den ersten Strompfad 22 sowie jeweils anteilig über die zweiten Strompfade 24 geleitet.

Der erste Strompfad 22 weist einen mechanischen Schalter 26 auf, der als Doppelunterbrecher ausgebildet ist. Hierfür weist der mechanische Schalter 26 eine im Wesentlichen geradlinige Kontaktbrücke 28 auf, die senkrecht zu deren Ausdehnungsrichtung beweglich gelagert ist. Den gegenüberliegenden Enden der Kontaktbrücke 28 ist jeweils ein Bewegkontakt zugeordnet, die aufgrund der beweglichen Lagerung mechanisch an jeweils einen zugeordneten Festkontakt angelegt werden können. In diesem Fall ist der mechanische Schalter 26 geschlossen und elektrisch leitend. Mittels Verstellens der Kontaktbrücke 28 ist es möglich, die Bewegkontakte von den Festkontakten zu beabstanden. In diesem Fall ist der mechanische Schalter 26 geöffnet und elektrisch nichtleitend.

Elektrisch parallel zu dem mechanischen Schalter 26 und somit zu dem ersten Strompfad 22 ist ein erste Spannungssensor 30 geschaltet, der signaltechnisch mit der Steuereinheit 20 verbunden ist. Hierbei ist es möglich, mittels des erste Spannungssensors 30 die über den mechanischen Schalter 26 anfallende elektrische Spannung zu erfassen. Falls diese vernachlässigbar ist, ist der mechanische Schalter 26 geschlossen. Falls hingegen die gemessen elektrische Spannung größer ist, ist der mechanische Schalter 26 geöffnet.

Die beiden zweite Strompfade 24 sind zueinander baugleich und weisen jeweils zwei Halbleiterschalter 32 auf, die als n-Kanal MOSFET ausgebildet sind. Somit sind die Halbleiterschalter 32 selbstsperren, und wenn an deren Gate kein elektrisches Potential anliegt, sind die Halbleiterschalter 32 hochohmig. Die Gates der Halbleiterschalter 32 sind miteinander elektrisch direkt verbunden sowie mit der Steuereinheit 20, mittels derer somit die Halbleiterschalter 32 betrieben sind. Dabei befinden sich aufgrund der elektrischen Verbindung der Gates sämtliche Halbleiterschalter 32 entweder in dem elektrisch leitenden oder elektrisch nichtleitenden Zustand, sofern kein Fehler vorliegt. Die Halbleiterschalter 32 jedes zweiten Strompfads 24 sind elektrisch in Reihe geschaltet, wobei deren Sperrrichtung zueinander entgegengesetzt ist. Sofern somit sämtliche Halbleiterschalter 32 hochohmig sind, ist ein elektrischer Stromfluss über die zweiten Strompfade 24 in beide Stromrichtungen unterbunden.

Elektrisch in Reihe zu den beiden Halbleiterschaltern 32 jedes zweiten Strompfads 24, nämlich in der Darstellung zwischen diesen, ist sowohl ein Stromsensor 34 als auch eine Sicherung 36 geschaltet. Somit weist jeder zweite Strompfade 24 den Stromsensor 34 und die Sicherung 36 auf, die elektrisch in Reihe mit den Halbleiterschaltern 32 des gleichen zweiten Strompfads 24 geschaltet sind.

Elektrisch parallel zu den zweiten Strompfade 24 ist jeweils ein zweiter Spannungssensor 38 und eine Suppressordiode 40 geschaltet. Mittels der Suppressordiode 40 wird dabei sichergestellt, dass die maximal über die zweiten Stromfade 24 anfallende elektrische Spannung begrenzt ist, die mittels des zweite Spannungssensors 38 gemessen werden kann. Sofern die Halbleiterschalter 32 elektrisch leitend sind, ist die mittels des zweiten Spannungssensors 38 erfasste elektrische Spannung vergleichsweise gering, wobei diese im Vergleich zu der mittels des ersten Spannungssensors 30 erfassten elektrischen Spannung aufgrund der Innenwiderstände der Halbleiterschalter 32 geringfügig erhöht ist.

Das Schaltgerät 10 weist ferner einen Antrieb 42 mit einer ersten Antriebseinheit 44 und einer zweiten Antriebseinheit 46 auf. Jede der Antriebseinheiten 44, 46 umfasst dabei eine elektrische Spule, die in Wirkverbindung mit einem magnetischen Bauteil ist, das an der Kontaktbrücke 28 angebunden ist. Die elektrische Spule der zweiten Antriebseinheit 46 umgibt die elektrische Spule der erste Antriebseinheit 44, mittels derer wiederum das magnetische Bauteil umgeben ist. Somit wird bei Bestromung einer der beiden elektrischen Spulen jeweils das magnetische Bauteil bewegt und infolgedessen die Kontaktbrücke 28 verstellt.

Die erste Antriebseinheit 44 hingegen ist mit der Steuereinheit 20 elektrisch kontaktiert, sodass die erste Antriebseinheit 44 mit der Steuereinheit 20 bestromt ist. Dabei ist es möglich, mittels der Steuereinheit 20 die an den Hilfsanschlüssen 18 anliegende elektrische Spannung an die erste Antriebseinheit 44 anzulegen, wobei die Polarität geändert werden kann. Infolgedessen ist es möglich, mittels der elektrischen Spule der ersten Antriebseinheit 44 das magnetische Bauteil in unterschiedliche Richtungen zu bewegen, sodass die Kontaktbrücke 28 ebenfalls in unterschiedliche Richtungen bewegt werden kann. Mit anderen Worten ist es möglich, mittels entsprechenden Bestromens der ersten Antriebseinheit 44 durch die Steuereinheit 20 den mechanischen Schalter 26 sowohl zu öffnen als auch zu schließen.

Die zweite Antriebseinheit 46 ist parallel zur den zweiten Strompfaden 24 geschaltet und weist einen Gleichrichter auf, über den die elektrische Spule der zweiten Antriebseinheit 46 mit den Enden der zweiten Strompfade 24 elektrischen kontaktiert ist. Somit ist sichergestellt, dass die elektrische Spule der zweiten Antriebseinheit 48 stets lediglich in eine einzige Stromrichtung durchflossen, sodass auf das magnetische Bauteil eine Kraft lediglich in eine Richtung aufgebracht werden kann. Dabei kann mittels des magnetischen Bauteils auf die Kontaktbrücke 28 lediglich eine von den Festkontakten weggerichtet Kraft aufgebracht werden. Zusammenfassend ist es mittels der zweiten Antriebseinheit 46 nur möglich, den mechanischen Schalter 26 zu öffnen, also in den geöffneten Zustand zu überführen. Dabei ist aufgrund des Gleichrichters, der Ausgestaltung der elektrischen Spule und/oder eines entsprechenden Widerstands des zweite Antriebseinheit 46 sichergestellt, dass das Verstellen der Kontaktbrücke 28 lediglich dann erfolgt, wenn mittels der zweite Antriebseinheit 46 zumindest ein vorbestimmter elektrischer Strom geführt wird. Anderenfalls ist in die magnetische Wechselwirkung zwischen der elektrischen Spule und dem magnetischen Bauteil zu gering.

Das Schaltgerät 10 ist für einen Nennstrom ausgelegt. Dieser beträgt beispielsweise 10 A. Somit sind die einzelnen Bestandteile des Schaltgeräts 10 ausgelegt, dass mittels des Schaltgeräts 10 ein elektrischer Strom von 10 A für eine im Wesentlichen unbegrenzte Zeitdauer geführt werden kann. Aufgrund der Parallelschaltung der zweite Strompfade 26 ist der erforderliche Nennstrom der Halbleiter 32 gleich 5. Die Sicherungen 36 sind dabei derart ausgelegt, dass diese bei einem elektrischen Strom von 5 A zuzüglich einer Toleranz von 10 % auslösen. Somit ist sichergestellt, dass auch bei einer kurzzeitigen Erhöhung des mittels des Schaltgeräts 10 geführten elektrischen Stroms kein Auslösen erfolgt.

Der vorbestimmte elektrische Strom, ab dem mittels der zweiten Antriebseinheit 46 der mechanische Schalter 26 in den geöffneten Zustand überführt wird, ist dabei gleich dem Nennstrom und ist kleiner als das Zweifache des Nennstroms und größer als der Hälfte des Nennstroms. Zusammenfassend ist somit das Schaltgerät 10 derart ausgebildet, dass der mechanische Schalter 26 in den geöffneten Zustand überführt wird, wenn mittels der zweiten Antriebseinheit 46 der vorbestimmte elektrische Strom geführt wird, der kleiner als das Dreifache des Nennstroms ist.

Das Schaltgerät 10 ist gemäß einem Verfahren 48 betrieben, das zumindest teilweise mittels der Steuereinheit 10 durchgeführt wird und in Figur 3 dargestellt ist. Das Verfahren 48 wird dabei gestartet, wenn die Last 8 betrieben wird, also im Normalbetrieb. In einem ersten Arbeitsschritt 50 wird überprüft, ob eine bestimmte Bedingung 52 vorliegt. Die bestimmte Bedingung 52 liegt dabei stets alle 24 Stunden vor.

Wenn die bestimmte Bedingung 52 vorliegt, wird ein zweiter Arbeitsschritt 54 durchgeführt. Das Durchführen des zweiten Arbeitsschritt 54 ist dabei lediglich abhängig davon, ob die bestimmte Bedingung 52 vorliegt und unabhängig von sonstigen Gegebenheiten. In dem zweiten Arbeitsschritt 54 wird mittels der Steuereinheit 20 die erste Antriebseinheit 44 derart bestromt, dass der mechanische Schalter 26 geöffnet wird. Sofern dies fehlerfrei erfolgt, bricht der zwischen den Anschlüssen 16 geführte elektrische Strom zusammen, und die über den mechanischen Schalter 26 anfallende elektrische Spannung steigt an, was mittels des ersten Spannungssensors 30 erfasst wird. Auch wird dann mittels der Stromsensoren 34 kein elektrischer Strom mehr gemessen. Somit wird redundant überprüft, ob tatsächlich zwischen den Anschlüssen 16 kein elektrischer Strom mehr fließt.

Wenn dies der Fall ist, also wenn die erste Antriebseinheit 44 fehlerfrei gearbeitet hat, und auch die Messdaten des ersten Spannungssensors 30 sowie der Stromsensoren 34 zueinander korrespondieren und diese somit auch fehlerfrei arbeiten, wird ein dritter Arbeitsschritt 56 durchgeführt. In dem dritten Arbeitsschritt 46 wird die erste Antriebseinheit 44 in umgekehrter Richtung bestromt, sodass der mechanische Schalter 26 geschlossen wird. Folglich im Anschluss an das Überführen des mechanischen Schalters 26 in den geöffneten Zustand die erste Antriebseinheit 44 mittels der Steuereinheit 20 derart bestromt, dass der mechanische Schalter 26 erneut in den geschlossenen Zustand überführt wird, also nachdem der elektrische Strom unterbrochen wurde. Somit wird über das Schaltgerät 10 erneut der elektrische Strom geführt. Während mittels des Schaltgeräts 10 kein elektrischer Strom geführt wurde, wird die Last 8 mittels der Kapazität 12 bestromt, sodass mittels der Last auch 8 auch weiterhin die gewünschte Funktionalität durchgeführt werden kann. Auch ist der zeitliche Abstand zwischen dem zweiten und dritten Arbeitsschritt 54, 56 entsprechend kurz gewählt.

Nach den dritten Arbeitsschritt 56 wird erneut der erste Arbeitsschritt 50 durchgeführt und somit überwacht, ob erneut die bestimmte Bedingung 52 vorliegt, also ob wiederum 24 Stunden vergangen sind. Folglich erfolgt ein tägliches Überprüfen des Schaltgeräts 10.

Falls hingegen bei dem zweiten Arbeitsschritt 54 der elektrische Strom nicht unterbrochen wurde und/oder die mittels des ersten Spannungssensors 30 und der Stromsensoren 34 gemessenen Werten nicht zueinander korrespondieren, beispielsweise da mittels der Stromsensoren 34 kein elektrischer Strom gemessen werden kann, obwohl mittels des ersten Spannungssensors 30 auch keine elektrische Spannung über dem mechanischen Schalter 26 gemessen wird, wird ein vierter Arbeitsschritt 58 durchgeführt. In diesem werden mittels der Steuereinheit 20 die Halbleiterschalter 32 in den elektrisch nichtleitenden Zustand überführt. Aufgrund einer derartigen Ansteuerung sind nunmehr sämtliche zweiten Strompfade 24 hochohmig, und mittels der beiden zweiten Strompfade 24 wird kein elektrischer Strom. Falls eine weitere Fehlfunktion vorliegen sollte, und beispielsweise lediglich die Halbleiterschalter 32 eines der zweiten Strompfade 24 in den elektrisch nichtleitenden Zustand überführt werden, wird der vollständige elektrische Strom zunächst mittels des anderen der beiden zweiten Strompfade 24 geführt. Die Sicherung 36 ist dabei nicht auf einen derart großen elektrischen Strom n ausgelegt und löst aus, sodass nunmehr beide zweiten Strompfade 24 unterbrochen sind.

Sobald beide zweiten Strompfade 24 unterbrochen sind wird der auch weiterhin zwischen den beiden Anschlüssen 16 geführte elektrische Strom mittels der zweiten Antriebseinheit 46 geführt. Infolgedessen wird der mechanische Schalter 26 geöffnet, und der elektrische Strom bricht vollständig zusammen. Dabei sind die beiden Anschlüsse 16 zueinander galvanisch getrennt. Anschließend wird eine entsprechende Warnung ausgegeben, beispielsweise eine LED oder dergleichen aktiviert. Anschließend ist das Verfahren 48 beendet.

Solange das Verfahren 48 durchgeführt wird, wird zudem ein fünfter Arbeitsschritt 60 durchgeführt, in dem überwacht wird, ob eine Aufforderung 62 vorliegt. Diese wird über die Signalleitungen 14 von der Last 8 zu dem Schaltgerät 10 übertragen, nämlich dann, wenn der Betrieb der Last 8 beendet oder zumindest unterbrochen werden soll. Die Aufforderung 62 wird dabei beispielsweise erstellt, wenn die mittels der Last 8 bereitgestellte Funktionalität nicht mehr benötigt wird, oder falls eine Fehlfunktion der Last 8 vorliegt. Somit dient das Schaltgerät 10 auch der Bereitstellung von Sicherheit. Mittels der Aufforderung 62 ist dabei spezifiziert, dass der über das Schaltgerät 10 geführte elektrische Strom unterbrochen werden soll. Zusammenfassen wird in dem fünften Arbeitsschritt 60 somit die Aufforderung 62 zum Unterbrechen des über das Schaltgerät 10 geführten elektrischen Stroms mittels der Steuereinheit 10 erfasst.

In einem sich anschließenden sechsten Arbeitsschritt 64 wird die erste Antriebseinheit 44 mittels der Steuereinheit 10 bestromt. Die Bestromung ist dabei derart, dass eine Kraft auf die Kontaktbrücke 28 ausgeübt wird, sodass die Bewegkontakte von den Festkontakten beabstandet werden. Mit anderen Worten wird die erste Antriebseinheit 44 mittels der Steuereinheit 10 derart bestromt, dass der mechanische Schalter 26 in den geöffneten Zustand überführt wird. Im Anschluss hieran wird mittels der Stromsensoren 34 sowie des ersten Stromsensors 30 überprüft, ob mittels des Schaltgeräts 10 noch weiterhin der elektrische Strom geführt wird. Dieses ist beispielsweise dann der Fall, wenn die erste Antriebseinheit 44 einen Fehler aufweist.

In diesem Fall wird dann auch der vierte Arbeitsschritt 58 durchgeführt und somit nach dem Bestromen der ersten Antriebseinheit 44 werden die Halbleiterschalter 32 in den elektrisch nichtleitenden Zustand überführt. Somit wird dann die zweite Antriebseinheit 46 bestromt, sodass der mechanische Schalter 26 geöffnet wird. Folglich ist auch bei einer Fehlfunktion ein sicheres Unterbrechen des elektrischen Stroms gegeben. Auch wenn die Steuereinheit 20 einen Fehler aufweisen sollte, und keine korrekte Ansteuerung der Halbleiterschalter 32 mehr erfolgt, ist aufgrund der selbstsperrenden Halbleiterschaltern 32 sichergestellt, dass dann ebenfalls der elektrische Strom mit der zweiten Antriebseinheit 46 geführt wird, sodass der mechanische Schalter 26 geöffnet wird.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Stromkreis
- 4: Gleichspannungsquelle
- 6: Pol
- 8: Last
- 10: Schaltgerät
- 12: Kapazität
- 14: Signalleitung
- 16: Anschluss
- 18: Hilfsanschluss
- 20: Steuereinheit
- 22: erster Strompfad
- 24: zweiter Strompfad
- 26: mechanischer Schalter
- 28: Kontaktbrücke
- 30: erster Spannungssensor
- 32: Halbleiterschalter
- 34: Stromsensor
- 36: Sicherung
- 38: zweiter Spannungssensor
- 40: Suppressordiode
- 42: Antrieb
- 44: erste Antriebseinheit
- 46: zweite Antriebseinheit
- 48: Verfahren
- 50: erster Arbeitsschritt
- 52: bestimmte Bedingung
- 54: zweiter Arbeitsschritt
- 56: dritter Arbeitsschritt
- 58: vierter Arbeitsschritt
- 60: fünfter Arbeitsschritt
- 62: Aufforderung
- 64: sechster Arbeitsschritt

## Patentansprüche

1. Schaltgerät (10), das für einen Nennstrom ausgelegt ist, und das zwei Anschlüsse (16) umfasst, die mittels eines ersten Strompfads (22) und eines zweiten Strompfads (24) elektrisch verbunden sind, die elektrisch in Reihe geschaltet sind, wobei der erste Strompfad (22) einen mechanischen Schalter (26) und der zweite Strompfad (24) einen Halbleiterschalter (32) aufweist, wobei der mechanische Schalter (26) mit einem Antrieb (42) angetrieben ist, der eine erste Antriebseinheit (44), die mit einer Steuereinheit (20) bestromt ist, und eine zweite Antriebseinheit (46) aufweist, die parallel zu dem zweiten Strompfad (24) geschaltet ist, und wobei das Schaltgerät (10) derart ausgebildet ist, dass der mechanische Schalter (26) in einen geöffneten Zustand überführt wird, wenn mittels der zweiten Antriebseinheit (46) ein vorbestimmter elektrischer Strom geführt wird, der kleiner als das Dreifache des Nennstroms ist.

2. Schaltgerät (10) nach Anspruch 1,
**dadurch gekennzeichnet,**
**dass** der vorbestimmte elektrischer Strom kleiner als das Zweifache des Nennstroms und/oder größer als die Hälfte des Nennstroms ist.

3. Schaltgerät (10) nach Anspruch 1 oder 2,
**dadurch gekennzeichnet,**
**dass** der Halbleiterschalter (32) selbstsperrend ausgebildet ist.

4. Schaltgerät (10) nach einem der Ansprüche 1 bis 3,
**dadurch gekennzeichnet,**
**dass** der Halbleiterschalter (32) mittels der Steuereinheit (20) betrieben ist.

5. Schaltgerät (10) nach einem der Ansprüche 1 bis 4,
**dadurch gekennzeichnet,**
**dass** der zweite Strompfad (24) einen Stromsensor (34) aufweist, der elektrisch in Reihe mit dem Halbleiterschalter (32) geschaltet ist.

6. Schaltgerät (10) nach einem der Ansprüche 1 bis 5,
**dadurch gekennzeichnet,**
**dass** der zweite Strompfad (24) eine Sicherung (36) aufweist, die elektrisch in Reihe mit dem Halbleiterschalter (32) geschaltet ist.

7. Schaltgerät (10) nach einem der Ansprüche 1 bis 6,
**gekennzeichnet durch**
mehrere zweite Strompfade (24) die elektrisch parallel zueinander geschaltet sind.

8. Verfahren (48) zum Betrieb eines Schaltgeräts (10) nach einem der Ansprüche 1 bis 7, bei welchem
- eine Aufforderung (62) zum Unterbrechen eines über das Schaltgerät (10) geführten elektrischen Stroms mittels der Steuereinheit (10) erfasst wird,
- die erste Antriebseinheit (44) mittels der Steuereinheit (10) derart bestromt wird, dass der mechanische Schalter (26) in den geöffneten Zustand überführt wird.

9. Verfahren (48) nach Anspruch 8,
**dadurch gekennzeichnet,**
**dass** nach dem Bestromen der ersten Antriebseinheit (44) der Halbleiterschalter (32) in den elektrisch nichtleitenden Zustand überführt wird, wenn noch weiterhin der elektrische Strom geführt wird.

10. Verfahren (48) nach Anspruch 8 oder 9,
**dadurch gekennzeichnet,**
**dass** unabhängig von der Aufforderung (62), wenn eine bestimmte Bedingung (52) vorliegt, die erste Antriebseinheit (44) mittels der Steuereinheit (10) derart bestromt wird, dass der mechanische Schalter (26) in den geöffneten Zustand überführt wird, und dass anschließend die erste Antriebseinheit (44) mittels der Steuereinheit (20) derart bestromt wird, dass der mechanische Schalter (26) in den geschlossenen Zustand überführt wird, wenn der elektrische Strom unterbrochen wurde, und dass anderenfalls der Halbleiterschalter (32) in den elektrisch nicht leitenden Zustand überführt wird.
